Europäisches Patentamt

**European Patent Office**

**Office européen des brevets**

(11) Publication number: **0 098 777**
A2

# EUROPEAN PATENT APPLICATION

(21) Application number: **83401354.2**

(22) Date of filing: **30.06.83**

(51) Int. Cl.³: **F 16 D 1/02,** F 16 D 3/76

(30) Priority: **01.07.82 US 394241**

(43) Date of publication of application: **18.01.84** Bulletin **84/3**

(84) Designated Contracting States: **DE FR GB IT**

(71) Applicant: **THE BENDIX CORPORATION, Executive Offices Bendix Center, Southfield Michigan 48037 (US)**

(72) Inventor: **Rauch, Burton Stanley, 7 Pittsfield Road, Howell New Jersey 07731 (US)**

(74) Representative: **Brullé, Jean et al, Service Brevets Bendix 44, rue François 1er, F-75008 Paris (FR)**

(54) **Coupling arrangement for driving and driven members.**

(57) A coupling arrangement is disclosed whereby a metallic driven member (4) is coupled to a metallic driving member (2) through a non-metallic adapter (6). Adapter (6) has an internal harmonically varying polygonal profile (12) which mates with a like external polygonal profile (14) on the driven member. A coupling arrangement of the type described has sufficient strength to transmit required torques from the driving (2) to the driven (4) members and has sufficient compliance to accept relatively high misalignments between the driving (2) and driven (4) members without excessive wear on said members as might otherwise occur.

ACTORUM AG

COUPLING ARRANGEMENT FOR DRIVING AND DRIVEN MEMBERS

BACKGROUND OF THE INVENTION

Driving and driven members such as a metallic driving shaft and a metallic driven shaft must be coupled to transmit required torques from the driving to the driven shaft. The coupling arrangement must take into consideration that frequently, relatively high misalignments between the driving and driven shafts occur. These misalignments must be accommodated without high stress concentration. Further, the coupling arrangement must function in the aforenoted misaligned condition without excessive wear caused by fretting when the two metallic shafts are subjected to relative motion.

The present invention accommodates the above conditions by providing a non-metallic adapter which is interposed between the metallic driving shaft and the metallic driven shaft. An adapter of the type described has sufficient strength to transmit the required torques, and also has sufficient compliance to permit acceptance of relatively high misalignments without adverse high stress concentration. Further, the interposition of the non-metallic adapter eliminates the aforenoted wear producing fretting condition.

SUMMARY OF THE INVENTION

This invention contemplates an arrangement for coupling a metallic driven member to a metallic driving member. A non-metallic adapter has an external spline which mates with an internal spline on the driving member. The adapter has a longitudinally extending internal three or four lobe harmonically varying polygonal profile which mates with a like longitudinally extending crowned external harmonically varying polygonal profile on the driven member. A coupling arrangement of the type described has sufficient strength to transmit required torques in a condition of misalignment between the driving and driven members while eliminating excessive wear on said members which might otherwise occur.

Accordingly, it is the object of the invention to provide a coupling arrangement including a non-metallic relatively compliant adapter for coupling metallic driving and driven members so as to negate the effect of misalignment between said members and to eliminate wear of said members which might otherwise occur.

## BRIEF DESCRIPTION OF THE DRAWINGS

Figure 1 is a sectional diagrammatic representation showing the structural interrelation between the driving and driven members and the coupling arrangement therefor according to the invention.

Figure 2 is a sectioned plan view of an adapter included in the coupling arrangement shown in Figure 1.

Figure 3 is an end view of the adapter of Figure 2 illustrating one form of the invention, wherein the adapter has an internal four lobe polygonal profile.

Figure 4 is an end view of the adapter of Figure 2 illustrating another form of the invention wherein the adapter has a three lobe internal polygonal profile.

Figure 5 is a partial plan view of a driven member according to the invention.

Figure 6 is a diagrammatic end view representation of the driven member of Figure 5 and illustrating an external four lobe polygonal profile corresponding to the internal polygonal profile shown in Figure 3.

Figure 7 is a diagrammatic end view representation of the driven member of Figure 5 and illustrating an external three lobe polygonal profile corresponding to the internal polygonal profile shown in Figure 4.

Figure 8 is a perspective view of the member of Figure 5, wherein the member is shown, for example, as having an external four lobe polygonal profile.

Figure 9 is a perspective view of the adapter of Figure 2, wherein the adapter is shown, for example, as having an internal four lobe polygonal profile so as to mate with the external profile of Figure 8.

Figure 10 is a diagrammatic representation illustrating the geometry of the three lobe polygonal profile and particularly illustrating the harmonic variation of the profile.

Figure 11 is a diagrammatic representation illustrating the geometry of the four lobe polygonal profile and particularly illustrating the harmonic variation of the profile.

## DETAILED DESCRIPTION OF THE INVENTION

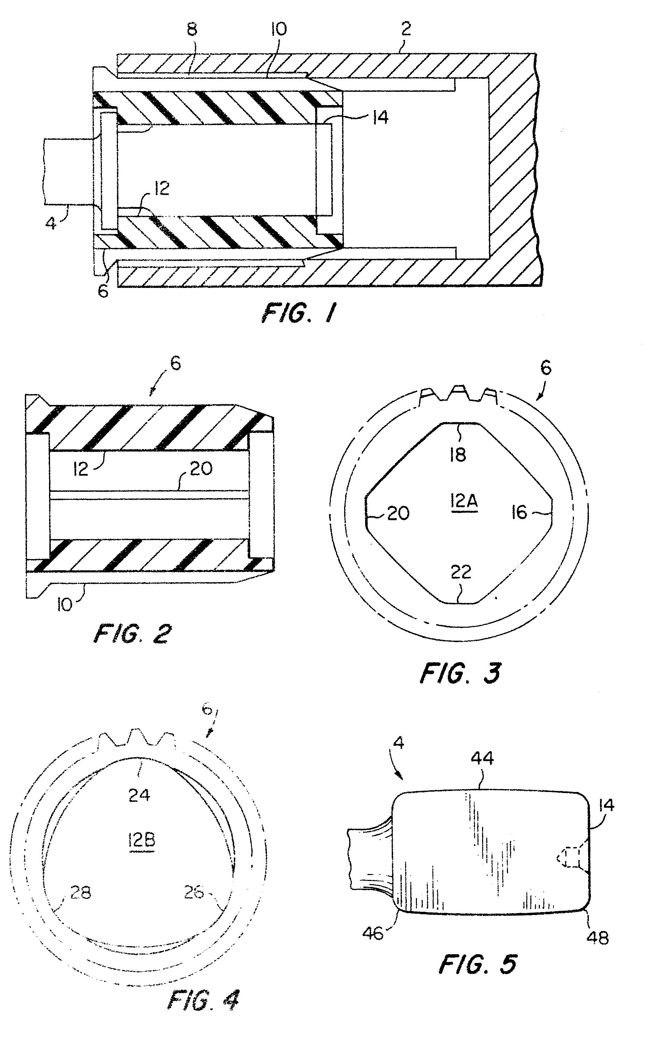

With reference first to Figure 1, a metallic drive member or shaft is designated by the numeral 2 and a metallic driven member or shaft is designated by the numeral 4. A non-metallic adapter is designated by the numeral 6. Adapter 6 is of a polyimide material such as that marketed under the trade designation Vespel SP1 by the Dupont Corporation or that marketed under the trade designation Torlon 4203 by the Amoco Corporation.

Drive shaft 2 has an internal spline 8 which engages in mating relationship an external spline 10 carried by adapter 6 to prevent relative rotation between the drive shaft and adapter. Adapter 6 has a longitudinally extending internal profile 12 which corresponds to a longitudinally extending external profile 14 of driven shaft 4. Profiles 12 and 14 are in the particular form of and for purposes as will be hereinafter more fully described.

Adapter 6 is more particularly shown in Figures 2, 3 and 4. In the form of the invention shown in Figure 3, the logitudinally extending profile of adapter 6 is designated as 12A and is of a four lobe polygonal configuration. The lobes are equally spaced and are designated by the numerals 16, 18, 20 and 22.

In the form of the invention shown in Figure 4, the longitudinally extending internal profile of adapter 6 is designated as 12B and is of a three lobe polygonal configuration. The lobes are equally spaced and are designated by the numerals 24, 26 and 28.

Driven shaft 4, as shown in Figure 5, has longitudinally extending external profile 14 which may be of the three or four lobe polygonal profile corresponding to internal profiles 12A or 12B, as the case may be.

With reference to Figure 5, it will be seen that external profile 14 of driven shaft 4, whether it be of the three or four lobe polygonal configuration, is longitudinally crowned. That is to say, the center portion 44 of the periphery of the external profile is of a larger diameter than the end portions 46 and 48 so as to impart a barrel-like shape to the external profile.

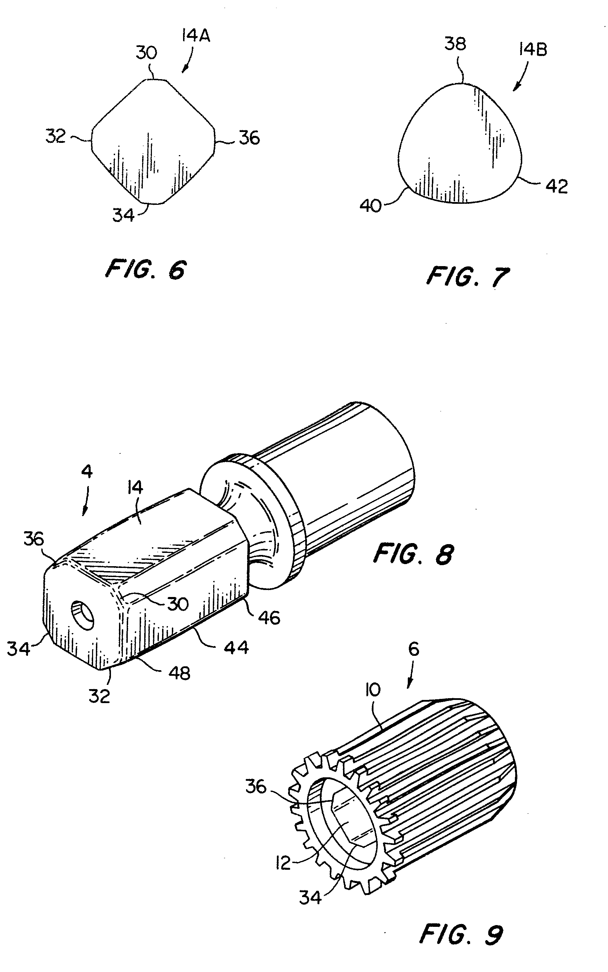

With reference to the crowning of the external profile of driven shaft 4, it will be understood that the purpose of said crowning is to permit adapter 6, also shown in the perspective view of Figure 9 (four lobe configuration) and driven shaft 4, also shown in the perspective view of Figure 8 (four lobe configuration) to function in a misaligned condition between the driven and driving shafts without excessive wear when the external profile of the driven shaft mates with or engages the internal profile of the adapter in sliding fit relationship. To put it another way, the purpose of crowning the external profile of driven shaft 4 is to prevent concentrated loading at the ends of the profile and to thereby eliminate the aforenoted excessive wear under conditions of misalignment as are likely to occur.

In the form of the invention shown in Figure 6, the external profile of driven shaft 4 (Figure 5) is designated as 14A and is of the four lobe polygonal configuration so as to correspond to internal four lobe profile 12A of coupling 6 as shown in Figure 3. The lobes of the external profile are designated as 30, 32, 34 and 36.

In the form of the invention shown in Figure 7, the external profile of driven shaft 4 (Figure 5) is designated as 14B and is of the three lobe polygonal configuration so as to correspond to internal three lobe profile 12B as shown in Figure 4. The lobes of the external profile are designated as 38, 40 and 42.

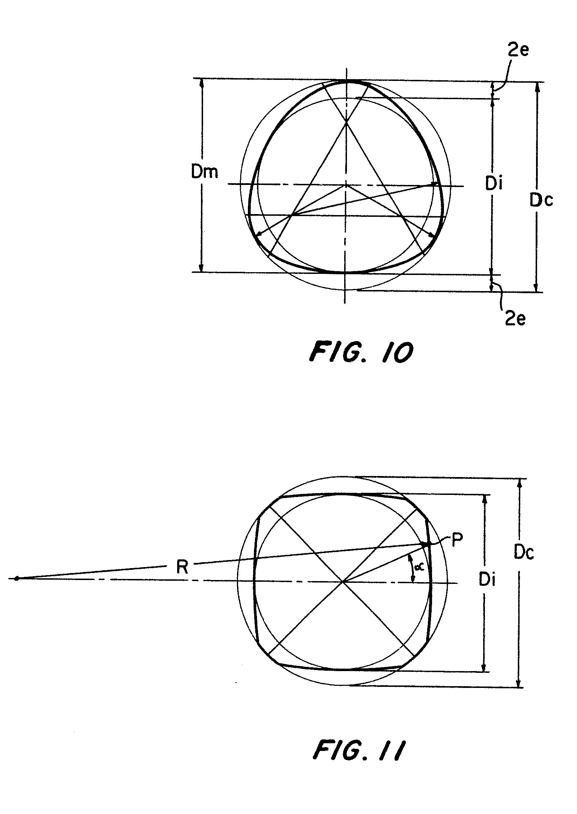

Figures 10 and 11 illustrate the geometry of the three and four lobe polygonal profiles (external and internal), respectively, heretofore referred to. Thus, the polygonal profiles are defined by a circumscribed circle having a diameter $D_c$ and an inscribed circle having a diameter $D_i$. $D_m$ is the "mean" diameter; e is the eccentric displacement of the polygonal profile; and R is the radius of the polygonal profile at a point P on the profile at an angle $\alpha$ from the horizontal.

The polygonal profile has an infinite number of radii, with the radius at any given point P being:

$$R = \frac{D_m}{2} + (n^2 - 1) e \cos n \alpha , \qquad (1)$$

where n is the number of lobes in the polygonal profile. The radius is small at the lobes and large at the areas between the lobes (the "flats") and the profile is seen to vary harmonically. The relationship between $D_m$, $D_i$, $D_c$ and e is as follows:

$$D_m = \frac{D_c + D_i}{2} \qquad ; \qquad (2)$$

$$D_m = D_c - 2e \qquad ; \qquad (3)$$

$$D_m = D_i + 2e \qquad ; \qquad (4)$$

$$e = \frac{D_c - D_i}{4} \qquad ; \qquad (5)$$

It will now be understood with reference to the aforegoing description of the invention that the polyimide material of coupling 6 is of sufficient strength to transmit the required torques from the driving to the driven shafts, and also has sufficient compliance to accept relatively high misalignments between said shafts without high stress concentration. The use of the harmonically varying polygonal profile in either the three or four lobe configuration as described, provides an easily manufactured part which uniformly distributes said stresses. The interposition of the non-metallic adapter and the crowning of external polygonal profiles 14A, 14B eliminates fretting such as will occur when two contacting metallic parts are subject to relative motion.

CLAIMS

1. A shaft coupling characterized by : a metallic female member (2) ; a non-metallic relatively compliant substantially tubular adapter (6) received by the female member and non-rotatably secured thereto ; a metallic male member (4) received by the adapter in sliding-fit relationship ; the adapter (6) having a longitudinally extending internal polygonal profile (12A) and the male member (4) having a corresponding longitudinally extending crowned external polygonal profile (12B) ; and the corresponding internal and external polygonal profiles are one of an equally spaced three lobe (24, 26, 28) and an equally spaced four lobe (16, 18, 20, 22) harmonically varying configuration.

2. A shaft coupling according to claim 1, characterized in that the one of an equally spaced three lobe (24, 26, 28) and an equally spaced four lobe (16, 18, 20, 22) corresponding internal and external polygonal profiles of a harmonically varying configuration is defined by a circumscribed circle having a diameter $D_c$ and an inscribed circle having a diameter $D_i$, with the mean diameter $D_m$ of the circumscribed and inscribed circles being $\dfrac{D_c + D_i}{2}$.

3. A shaft coupling according to claim 2, characterized in that the corresponding internal and external polygonal profiles have an infinite number of radii, with the radius R at any given point on the profile being $\dfrac{D_m}{2} + (n^2-1)\, e \cos \alpha$ ; wherein n is the number of lobes, e is the eccentric displacement of the polygonal profile and $\alpha$ is the angular displacement of the given point from the horizontal.

4. A shaft coupling according to claim 3, characterized in that the eccentric displacement e of the polygonal profile is $\dfrac{D_c - D_i}{4}$.

5. A shaft coupling characterized by : a metallic female member (2) ; a non-metallic relatively compliant substantially tubular adapter (6) received by the female member and non-rotatably secured thereto ; a metallic male member (4) received by the adapter in sliding-fit relationship ; the adapter (6) having a longitudinally extending internal polygonal profile (12A) ; the male member (4) having a corresponding longitudinally extending external polygonal profile (12B), said profile being longitudinally crowned so that its center portion (44) is larger than its end por- tions (46, 48) for accomodating misalignment between the male and female members .; the corresponding internal and external polygonal profiles being one configuration of three lobe (24, 26, 28) and four lobe (16, 18, 20, 22) configurations wherein said lobes are equally spaced around the periphery of the profile ; the profile being defined by a circumscribed circle and an inscribed circle and having an infinite number of radii which vary harmonically.

FIG. 1

FIG. 2

FIG. 3

FIG. 4

FIG. 5

FIG. 6

FIG. 7

FIG. 8

FIG. 9

FIG. 10

FIG. 11